# EUROPEAN PATENT APPLICATION

(11) **EP 4 640 316 A1**
(43) Date of publication of application: **29.10.2025**
(21) Application number: 24305664.5
(22) Date of filing: 28.04.2024
(51) Int. Cl.: B01L 3/02, B01L 3/00

(54) **METHOD FOR INDIVIDUAL DROPLET SEPARATION FROM A CARRIER FLUID**

(71) Applicant: Inorevia, 92220 Bagneux (FR)
(72) Inventor: Bourguet, Louis, 75019 Paris (FR); Lemang, Coline, 75015 Paris (FR); Dupré de Baubigny, Julien, 91400 Orsay (FR); Gosselin, David, 94230 Cachan (FR); Autebert, Julien, 94270 Le Kremlin-Bicêtre (FR)
(74) Representative: Bandpay & Greuter

(57) **Abstract**

The invention relates to a method of collecting at least one droplet, comprising steps of:
a) providing one or more droplets of a first fluid within a carrier fluid, the first fluid being immiscible with the carrier fluid,
b) placing a volume of the carrier fluid on a porous material, the volume comprising at least one droplet of the first fluid,
c) removing the carrier fluid by sorption by the porous material, and
d) recovering the droplet remaining on the porous material.

## Description

### TECHNICAL FIELD

The present invention relates to a method of collecting at least one droplet from a carrier fluid. This method is applicable in the field of minifluidics, encompassing millifluidics, microfluidics and nanofluidics, i.e. the manipulation of small volumes of fluids.

### TECHNICAL BACKGROUND

Millifluidics, microfluidics, nanofluidics, and minifluidics, which involve the manipulation of small volumes of a fluid such as a volume of less than 1 mL, or down to less than 1 nL, are gaining increasing importance in the industry, particularly in biomedical sciences, chemistry, environmental sciences, analytical sciences and so on.

A particular interest has emerged in the use of biphasic systems, in which multiple droplets of a first fluid are encapsulated in a non-miscible surrounding fluid (carrier fluid). Generally, the first fluid is a water-based liquid, and the non-miscible carrier fluid is an oil, for instance a fluorinated oil. This format is particularly used for compartmentalizing biological fluids and/or reagents. However, other formats, such as oil-in-water emulsions, also exist.

Numerous applications have been known, as disclosed, for example, in Teh et al., Lab Chip, 2008,8, 198-220.

In some cases, the droplets are highly confined, meaning that they take on an elongated shape due to the dimensions of surrounding the tube walls or channel walls along two transverse directions with respect to the axis of the tube or channel (i.e., direction of the flow in the tube or in the channel). In this case, the droplets are sometimes called "plugs", and thus the technology using such droplets is called "plug microfluidics". Examples of such technologies can be found e.g. in WO2004038363 or US2014342373.

There are several techniques available to manipulate droplets or plugs, such as fusing, sorting, or splitting them, as described in US2014037514 or in US2014342373, for example. In some applications, after the droplet generation, it is sufficient to characterize the droplets in situ, using optical or electrical methods (see e.g. US2023366125). In some other applications, however, after the droplet generation, it may be necessary to collect the droplets or plugs individually, or a subset of droplets or plugs, for further use, such as e.g. in Lang Nan et al., Small, 2020 Mar;16(9).

The collection of droplets can be achieved by flowing the droplet-containing or plug-containing carrier fluid towards an extremity of the tube or channel, and depositing the droplet or plug inside a vial or onto a surface.

However, the process of depositing a droplet in a vial or on a surface often results in the simultaneous deposition of some of the non-miscible carrier fluid (generally oil) with the droplet. While this is not always problematic, the residual carrier fluid can interfere with the droplets' subsequent use in certain applications, such as by affecting the volume or mass measurement, of by chemically or physically affecting the subsequent protocols.

Various methods have been proposed for separating two immiscible fluids (droplets of the first fluid (e.g., water-based fluid) and the non-miscible carrier fluid (e.g., oil)). For example, when these immiscible fluids are present as an emulsion, the emulsion can be broken to macroscopically separate the two fluids by gravity or centrifugation.

Another known method involves flowing a mixture of two fluids through, or onto, a membrane having a strong affinity for one of the two fluids, preferably the carrier fluid, followed by the separation by gravity, as described by, for example, Gupta et al., J. Mater. Chem. A, 16025-16058 (2017); Leng et al., Colloids Surf. A Physicochem. Eng. Asp. 533, 249-254 (2017); and by Liu et al., ACS Appl. Mater. Interfaces 7, 791-800 (2015).

Nonetheless, these methods separate the emulsion of the two phases into two monophasic fluids (one monophasic fluid of the carrier fluid and the other monophasic fluid where all the individual droplets are mixed), but do not allow for collection of individual droplets or plugs. In addition, these methods are not suitable for low or ultra-low volumes in microfluidics.

In the field of microfluidics, document US2020/230599 discloses a microfluidic probe head for processing a sequence of separate liquid volumes separated by spacers, including: an inlet, an outlet, a first fluid channel and a second fluid channel and a fluid bypass connecting the first fluid channel and the second fluid channel, wherein the first fluid channel delivers the sequence of separate liquid volumes from the inlet toward a deposition area, the fluid bypass allows the spacers to be removed from the first fluid channel obtaining a free sequence of separate liquid volumes without spacers, the first fluid channel delivers the free sequence of separate liquid volumes to the deposition area, and the second fluid channel delivers the removed spacers from the fluid bypass to the outlet.

This method may allow for the manipulation of small volumes of fluid, but it still does not solve the problem of collecting individual droplets/plugs without contamination by other droplets.

Especially in molecular biology, microfluidics has been used for the compartmentalization of reactions, especially for massively parallel sequencing sample preparation. While oils and surfactants are usually used to achieve the encapsulation, some surfactants may contain contaminants that interfere with biochemical reactions (Ramsay et al., Journal of the American Chemical Society. 2010;132(14):5096-5104), and the oils may impact subsequent electrophoresis analysis (Litborn et al., 2000, J Chrom B, 745, 137).

There is thus a need for a method for collecting at least one individual droplet without contamination from not only the residual carrier fluid but also (if desired) from other droplets involved in the method.

### SUMMARY OF THE INVENTION

The invention relates to the following items.

Item 1. A method of collecting at least one droplet, comprising steps of:
a) providing one or more droplets of a first fluid within a carrier fluid, the first fluid being immiscible with the carrier fluid,
b) placing a volume of the carrier fluid on a porous material, the volume comprising at least one droplet of the first fluid,
c) removing the carrier fluid by sorption by the porous material, and
d) recovering the droplet remaining on the porous material.

Item 2. The method of item 1, wherein the volume of the carrier fluid comprises a single droplet of the first fluid.

Item 3. The method of item 1, wherein the volume of the carrier fluid comprises two or more droplets of the first fluid, and the method further comprises a step of mixing the droplets before step d).

Item 4. The method of any one of items 1 to 3, wherein the volume of the carrier fluid placed on the porous material in step b) is from 10 nL to 50 µL, preferably from 0.1 µL to 30 µL, more preferably between 0.5 µL to 20 µL, and even more preferably between 1 µL to 10 µL.

Item 5. The method of any one of items 1 to 4, wherein the carrier fluid and the porous material are hydrophobic, and the first fluid is hydrophilic.

Item 6. The method of any one of items 1 to 5, wherein the carrier fluid comprises fluorinated oil.

Item 7. The method of any one of items 1 to 6, wherein step d) is performed by aspiration.

Item 8. The method of any one of items 1 to 7, wherein step b) and step d) are performed via the same capillary, and the method further comprises, between step b) and c), an intermediate step of aspirating air or a surrounding gas into the capillary as a spacer.

Item 9. The method of any one of items 1 to 8, wherein the contact angle of the carrier fluid on the porous material is lower than the contact angle of the first fluid on the porous material.

Item 10. The method of any one of items 1 to 9, wherein the contact angle of the carrier fluid on the porous material is greater than or equal to 0° and less than 90°, preferably from 0° to 45°, more preferably from 0° to 30°, still more preferably from 0° to 20°, and even more preferably from 0° to 5°.

Item 11. The method of any one of items 1 to 10, wherein the contact angle of the first fluid on the porous material is from more than 90° to less than or equal to 180°, preferably from 110° to 180°, and more preferably from 130° to 180°.

Item 12. The method of any one of items 1 to 11, wherein the porous material has a porosity of 10% to 80%, preferably from 20% to 60 %, preferably from 25% to 45 %.

Item 13. The method of any one of items 1 to 12, wherein the porous material comprises pores having an average size of below 50 µm, preferably below 20 µm, more preferably below 10 µm.

Item 14. The method of any one of items 1 to 13, wherein the porous material comprises a treated cotton, treated cellulose, parafilm, a fluorinated material, or a perfluorinated material.

Item 15. The method of any one of items 1 to 14, wherein the porous material is selected from PTFE (polytetrafluoroethylene), ETFE ethylene-tetrafluoroethylene), FEP (fluorinated ethylene-propylene), PFPE (perfluoropolyether), FKM (fluoroelastomer), and FFKM (perfluoroelastomer).

Item 16. The method of any one of items 1 to 15, wherein the porous material is in the form of a membrane, pellet or film, and/or wherein the porous material has a structure which is fibrous, in particular woven or non-woven, sintered or which is a foam.

Item 17. A microplate for performing the method of any one of items 1 to 16, comprising at least one well containing the porous material, preferably a plurality of wells containing the porous material.

Item 18. The microplate of item 17, further comprising at least one collection well, preferably a plurality of collection wells, and more preferably the same number of collection wells as the number of wells containing the porous material.

Item 19. A minifluidic instrument, comprising:
- a supplying unit comprising at least a channel and an outlet;
- a control unit for controlling the flow rate of a carrier fluid comprising at least one droplet in the channel of the supplying unit;
- the microplate of any one of item 17 or 18, and
- a manipulation unit for displacing at least one of the supplying unit and the microplate.

Item 20. The minifluidic instrument of item 19, further comprising an aspiration unit.

Item 21. The minifluidic instrument of item 19 or 20, further comprising an additional microplate comprising a well for a reagent and/or a sample, wherein the outlet can pipet in sequentially the sample and/or reagent.

Item 22. The minifluidic instrument of any one of items 19 to 21, wherein the supplying unit comprises multiple channels having a respective outlet, the microplate comprises a plurality of wells containing the porous material, and optionally the additional microplate comprises multiple wells.

Item 23. The method of any one of items 1 to 16, wherein the method is implemented in the minifluidic instrument according to any one of items 19 to 22.

The present invention makes it possible to overcome the drawbacks of the prior art. In particular, the invention provides a method for collecting at least one droplet, which makes it possible not only to recover the droplet without contamination from the residual carrier fluid but also to recover droplets individually - if desired.

More particularly, the method of the invention comprises steps of placing a volume of the carrier fluid comprising at least one droplet on a porous material and recovering the droplet remaining on the porous material. Indeed, the porous material removes the carrier fluid by sorption while leaving the droplet on the porous material, thereby allowing the droplet to be separated from the carrier fluid. In addition, the droplet remaining on the porous material is recovered right away after it is placed, allowing for the individual handling of the droplet.

### BRIEF DESCRIPTION OF THE DRAWINGS

**Figure 1** (views a to h) shows an example of the method of recovering a droplet according to the present invention.
**Figure 2a** to **Figure 2c** show schematic examples of a microplate of the invention.

### DESCRIPTION OF EMBODIMENTS

The invention will now be described in more detail without limitation in the following description.

The term "*millifluidic*" as used herein means a device or chip for manipulating a fluid having a volume of less than 10 mL, in which the minimal channel or chamber dimensions are of the order of 1 to 10 mm. The term "*microfluidic*" as used herein means a device or chip for manipulating a fluid having a volume of less than 10 µL, in which the minimal channel or chamber dimensions are of the order of 1 µm to less than 1000 µm. The term "*nanofluidic*" as used herein means a device or chip for manipulating a fluid having a volume of less than 10 nL, preferably less than 1 nL, in which the minimal channel or chamber dimensions are of the order of less than 1 µm. The term "*minifluidic*" is a generic term encompassing microfluidic, millifluidic and nanofluidic, except when specified otherwise.

The term "*channel*" as used herein means an elongated space such as a tube, duct, pipe, or conduit, along which fluids can flow. The channel is delimited by at least one inlet and at least one outlet. Each of the inlet and outlet may correspond to a connection port or may represent a mere junction with another channel for other upstream/downstream microfluidic operations. The channel extends or is elongated along a path from the inlet to the outlet. The direction of this path is referred to as the main axis or the longitudinal axis of the channel. It should be understood that the axis can be straight / linear but may also comprise a plurality of straight / linear portions, or may be curved, or may comprise curved portions.

The term "*welt*" as used herein means a chamber, void, or depression formed within a substrate (for example, microplate) that can hold a fluid, or formed by stacking different cut patterns on the substrate.

The term "*droplet*" as used herein means an isolated portion of a fluid. The term "*plug*" means a droplet which takes an elongated shape due to the dimensions of surrounding channel wall(s) along two transverse directions with respect to the longitudinal axis of the channel. Any "*droplet*" in this description may in particular be a plug.

The term "*emulsion*" as used herein refers to a mixture of two or more fluids that are normally immiscible. In an emulsion, one fluid (dispersed phase) is dispersed in another fluid (continuous phase). The emulsion used in the present invention may be a "water-in-oil" emulsion, in which an aqueous fluid (e.g., droplets of the first fluid) is dispersed in an oil-based fluid (e.g., fluorinated oil).

The term "*sorption*" as used herein refers to absorption or adsorption or a combination of absorption and adsorption and includes chemisorption and physisorption. Adsorption is a process in which an adsorbate (for example, a liquid) accumulates on the surface of an adsorbent (usually a solid). Absorption is a process in which a substance diffuses into a liquid or solid.

The term "*microplate*", as used herein, refers to a solid two-dimensional array of microwells (a well with a volume of less than 1 mL), or a single one-dimensional linear array of microwells (the so-called "stripwell" format), where the stripwell is placed in an appropriate supporting device (such supports are well known in the prior art).

The term "*cartridge*"*,* as used herein refers to a unit that may be disposable or reusable in whole or in part, and that can be configured to be used in conjunction with some other apparatus that has been suitably and complementarily configured to receive and operate on the cartridge.

### Method of collecting at least one droplet

The invention relates to a method of collecting at least one droplet.

The method comprises steps of:
a) providing at least one droplet of a first fluid within a carrier fluid, the first fluid being immiscible with the carrier fluid,
b) placing a volume of the carrier fluid on a porous material, the volume comprising at least one droplet of the first fluid,
c) removing the carrier fluid by sorption by the porous material, and
d) recovering the droplet remaining on the porous material.

Step a) of providing at least one droplet of a first fluid within a carrier fluid may be performed by any means known in the art, such as pipetting, flow focusing, and T-junctions.

The at least one droplet of the first fluid within the carrier fluid may be in the form of an emulsion of droplet(s) of the first fluid in the carrier fluid (which may be also referred to as "droplet emulsion").

Depending on the application, the droplet of the first fluid may comprise, as a non-limiting list, a reagent, a reactant, a biological sample, a chemical sample, a drug compound, an organelle, a living cell, a living organism, a colloidal particle, or a conventional material used in laboratory techniques, such as a magnetic bead, or any combination thereof.

Step b) of placing a volume of the carrier fluid may be performed via, for example, a capillary.

By "*capillary*" is meant a small and narrow tube-like structure. The capillary can refer to, for example, an outlet of a channel, or a pipette tip, or a tip of an (automated) liquid handling system.

The volume of the carrier fluid placed on the porous material in step b) may be suitably adjusted depending on the desired number of droplets to be deposited on the porous material.

In some embodiments, the volume of the carrier fluid may comprise a single droplet of the first fluid.

In other embodiments, the volume of the carrier fluid comprises two or more droplets of the first fluid. In this case, the method may further comprise a step of mixing the droplets before step d) of recovering the droplet remaining on the porous material.

The volume of the carrier fluid placed on the porous material in step b) may be from 10 nL to 50 µL, preferably from 0.1 µL to 30 µL, more preferably from 0.5 µL to 20 µL, and even more preferably from 1 µL to 10 µL.

Step d) of recovering the droplet remaining on the porous material may be performed via a capillary.

Preferably, step d) is performed by aspiration. In this case, the capillary may be an aspiration tip.

In some embodiments, step b) of placing a volume of the carrier fluid on a porous material, and step d) of recovering the droplet may be performed via the same capillary. This avoids the need to use multiple pipettes, which simplifies the method.

In this case, the method may further comprise, between step b), c) and d), an intermediate step of aspirating air or a surrounding gas into the capillary as a spacer. Such a spacer reduces the risk of additional contamination of the carrier fluid.

In other embodiments, step b) of placing a volume of the carrier fluid on a porous material, and step d) of recovering the droplet may be performed via different capillaries. For example, step b) is performed via a pipette tip while step d) is performed via an aspiration tip. This can further reduce the risk of additional contamination by the carrier fluid.

The porous material is a material that contains small, interconnected spaces or pores. The carrier fluid may accumulate on the surface of the porous material (*i*.*e*., the carrier fluid may be adsorbed on the porous material) and/or may be transported through the pores (*i*.*e*., the carrier fluid may be absorbed in the porous material). Such a porous material can increase the surface area of interaction between the carrier fluid and the porous material, thereby increase the sorption capacity of the porous material.

The porous material may have a porosity of from 10% to 80%, preferably from 20% to 60%, more preferably from 25% to 45%. The porosity may be measured, for example, by weighing a known volume of the porous material; based on the density of the bulk material, one can determine the volume of air present in the porous material and thus the porosity (ratio of the volume of air contained in a sample of porous material to the total volume of a sample of porous material).

The porous material may comprise pores having an average size of below 50 µm, preferably below 20 µm, more preferably below 10 µm.

The pore size may be measured for example by mercury intrusion or by capillary flow porometry.

Preferably, the porous material has a greater affinity (i.e., is more wetting) for the carrier fluid than for the first fluid.

In some embodiments, the contact angle of the first fluid on the porous material is higher than the contact angle of the carrier fluid on the porous material, for example, by 1° to 5°, by 5° to 10°, by 50° to 100°, or by 100° to 180°.

For example, the contact angle of the carrier fluid on the porous material may be greater than or equal to 0° and less than 90°, preferably from 0° to 45°, more preferably from 0° to 30°, still more preferably from 0° to 20°, and even more preferably from 0° to 5°.

The contact angle of the first fluid on the porous material may be more than 90° to less than or equal to 180°, preferably from 110° to 180°, and more preferably from 125° to 180°.

The contact angle may be measured using, for example, a goniometer. Specifically, a droplet of a known volume is placed on the surface of a sample, and the camera or optical system of the goniometer captures an image of the droplet. The image is then analyzed to determine the angle between the surface of the sample and the tangent line at the three-phase contact point where the droplet meets the surface, which is the contact angle.

In some embodiments, the carrier fluid and the porous material may be hydrophobic, and the first fluid may be hydrophilic. Advantageously, the porous material is superhydrophobic. Typically, a material is considered hydrophilic if its contact angle with water is less than 90°, and hydrophobic if it is more than 90° and superhydrophobic when said contact angle is more than 145°. A more detailed discussion can be found in KY Law, J. Phys. Chem. Lett. 2014, 5, 686-688.

For example, the first fluid may be aqueous while the carrier fluid may be non-aqueous.

Preferably, the carrier fluid may comprise (or be) oil, preferably fluorinated oil.

Examples of fluorinated oils that can be used in the invention are marketed as the FC series, such as Fluorinert FC40, FC42 and FC70. Other preferred options are marketed as Novec HFE-7500, HFE 7000, HFE7100 and others of this series.

The carrier fluid may also comprise a surfactant.

Examples of the surfactant include a perfluoropolyether moiety (e.g. known as Krytox) attached to a water-soluble polymer or oligomer, such as e.g. polyethylene glycol. Examples of these surfactants are described in WO2010/128157. Other examples of oil-soluble surfactants useful in the invention are e.g. 1H,1H,2H,2H-perfluoro-1-decanol, and other surfactants described in EP 1637226.

The surfactant in the carrier fluid may be used, depending on the application, at varying concentrations, such as from 0.001 to 0.01%, or from 0.01 to 0.1%, or from 0.1 to 0.5%, or from 0.5 to 5%, or even from 5 to 20% (by weight).

Various carrier fluids, such as fluorinated oils, and combinations of fluorinated oils and surfactants, are known in the art, and can be used in the invention.

The porous material may be in the form of a membrane, pellet, or film.

The porous material may have a fibrous structure, in particular woven or non-woven, or a sintered structure, or a foam structure.

For example, the porous material may comprise a treated cotton, treated cellulose, parafilm, a fluorinated material, or a perfluorinated material.

By "*treated*" is meant that the surface of the material is subjected to a surface treatment to modify the property of the surface, e.g., to make the surface more hydrophobic or hydrophilic, preferably more hydrophobic.

Such a surface treatment may be grafting of a functional group/compound on the surface of the material or impregnation of the material in a solution. When the porous material is hydrophobic, the functional group/compound may be a hydrophobic group/compound (such as fluorosilane or a fluorinated polymer), or the solution may comprise a fluorinated compound (such as fluorosilane or a fluorinated polymer).

When the carrier fluid is a fluorinated oil, the porous material is preferably a fluorinated material, or a perfluorinated material. This can maximize or at least increase the affinity of the porous material with the carrier fluid, and can minimize or at least reduce the affinity of the porous material with the droplet of the first fluid.

Examples of the fluorinated material and the perfluorinated material include PTFE (polytetrafluoroethylene), ETFE (ethylene-tetrafluoroethylene), FEP (fluorinated ethylene-propylene), PFPE (perfluoropolyether), FKM (fluoroelastomer), and FFKM (perfluoroelastomer).

In some other embodiments, the droplet of the first fluid may be hydrophobic, and the carrier fluid may be hydrophilic. This is advantageous in, for instance, green chemistry. In this case, the porous material may be hydrophilic, or superhydrophilic. Typically, a material is considered hydrophobic if its contact angle with water is more than 90°, and hydrophilic if it is less than 90° and superhydrophilic when it is less than 5° and water tends to spread as a flat film rather than in form of droplets.

The method of the invention may comprise repeating cycles of at least steps b) to d).

For example, in some embodiments, the method may comprise repeating cycles of steps b) and c) at least twice and repeating step d) the same number of times. In other terms, several volumes of carrier fluid are placed on the porous material, the carrier fluid being each time removed by sorption, and then the droplets of first fluid are recovered. In case the droplets (and especially the droplets from the various volumes of carrier fluid) have not been mixed, they can be recovered by different capillaries, or then can be recovered by the same capillary, with for instance gas spacers (generated by aspiration of gas) between the droplets within the capillary. The gas may be air.

In some other embodiments, the method may comprise repeating cycles of steps b) to d).

At each cycle, the recovered droplet(s) may be collected in a collection vial or a collection well.

When cycles of at least steps b) to d) are repeated (or when cycles of steps b)-c) are carried out, followed by several steps d)), the method may comprise placing the volume of the carrier fluid comprising at least one droplet of the first fluid at a distance from another volume placed in the subsequent cycle.

The distance may be at least 2 mm apart, for example, 2.1 mm, 2.2 mm, 2.3 mm, 2.4 mm or 2.5 mm apart. This ensures that the volume in a cycle does not touch the other volume from the subsequent cycle, thereby reducing the risk of cross-contamination between droplets during the deposition.

The various depositions (at step b)) may be performed on a same block or piece of porous material, at different positions, or they may be performed on different blocks or pieces of porous material (for example, in different wells, as will be described below).

At each cycle, a fresh porous material may be used (i.e., the porous material may be disposable), thereby further reducing the risk of contamination of oil and cross-contamination between droplets.

Alternatively, at each cycle, the same porous material may be used.

Alternatively, or additionally, the method may comprise repeating steps b) and c) twice or more, followed by one step d). This is in particular useful if several droplets are to be mixed. Two or more volumes of carrier fluid may then be successively deposited on the same porous material, for example on the same block or piece of porous material. The droplets contained in these volumes may merge *in situ*, as the carrier fluid is removed by sorption. The merged droplet may then be recovered from the porous material at step d).

The variation described in the previous paragraph may be combined with the variations described above. For example several groups of volumes of carrier fluid may be placed on porous material, each group comprising a plurality of volumes of carrier fluid (comprising each at least one droplet); the volumes within each group may be placed on the same porous material so that the droplets in each group merge; and then the merged droplets of the groups may be recovered, by different capillaries or by the same capillary with gas spacers between the merged droplets in the capillary.

The method as described above may be implemented in the minifluidic instrument of the invention, which will be described later.

### Microplate for collecting at least one droplet

The invention also relates to a microplate for collecting at least one droplet.

The method as described above may be performed using the microplate of the invention.

The microplate may be prepared for instance by microlithography, soft lithography, hot embossing, microcontact printing, direct laser writing, additive or subtractive 3D printing, micromachining, removing sacrificial wires or materials, injection molding or extrusion, preferably injection molding.

The microplate may be made of a material approved for manipulation of biological materials.

Examples of the materials which may be used to make the microplate, in particular the channels of the microplate, include elastomers, thermoplastics, resins, glass, fused silica, silicone, cellulose, or combinations thereof. Elastomers can be, for instance and in a non-limiting manner, silicones such as polydimethylsiloxane, polyurethanes, acrylic elastomers, fluoroelastomers, polyenes, materials marketed under the brand Tygon^{®} and combinations thereof. Thermoplastic polymers can be, for instance and in a non-limiting manner, polyolefins, such as polyethylene, polypropylene, and more generally polyenes and their copolymers, low or high density, crosslinked or not, cyclic olefin polymers, cyclic olefin copolymers, acrylates such as polymethylmethacrylates, polycarbonates, polyesters, fluorinated polymers, polyamides and combinations thereof. Resins may notably be epoxy, polyester and/or polyurethane resins.

The microplate comprises at least one well containing the porous material, preferably a plurality of wells containing the porous material.

The porous material may be the same as the porous material described above. The porous material may be in the form of several blocks or pieces, each block or piece being placed in a respective well. Each block or piece of porous material may substantially occupy the entire volume of the well or may occupy only a portion of the volume of the well. Alternatively, the porous material may be made of a single piece which may extend over several wells.

The wells may have a volume of less than 1 mL, having a diameter of 1 to 10 mm, for example, and a depth of 1 to 5 mm.

Each well may further comprise one or more ridges or protrusions on its inner wall, for fixing the porous material inside the well, e.g. by friction fitting.

When the microplate comprises a plurality of wells containing the porous material, the wells may be spaced at least at least 2 mm apart from each other, for example, 2.1 mm, 2.2 mm, 2.3 mm, 2.4 mm or 2.5 mm apart. This can ensure that the volume of the fluid (for example, a volume of the carrier fluid comprising at least one droplet) does not touch other volumes of the fluid deposited on the porous material in other wells, thereby reducing the risk of cross-contamination between droplets during the deposition.

For example, the microplate may comprise 1 to 100 wells containing the porous material, for example, 1 to 10 wells, 10 to 30 wells, 30 to 50 wells, 50 to 80 wells, or 80 to 100 wells.

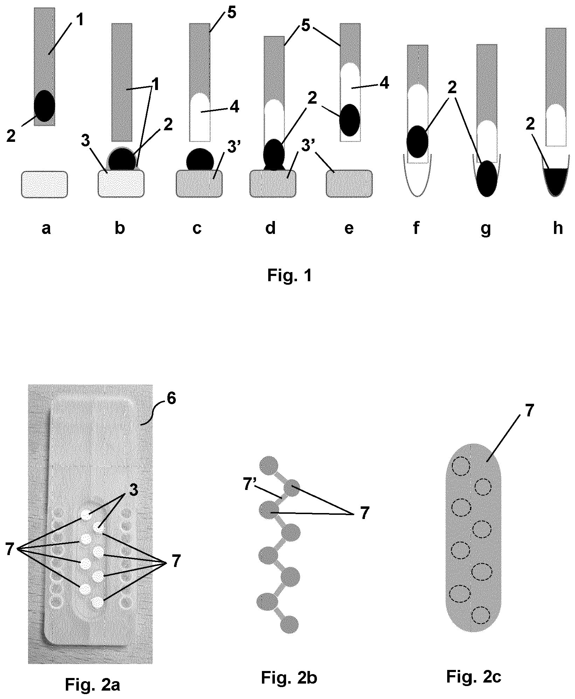

When the microplate comprises a plurality of wells containing the porous material, the wells may be arranged in a single row, or in two or more rows (thus being positioned on a two-dimensional array). Each row contains a plurality of wells aligned along one direction. The rows may be parallel to each other. Each row may contain the same number of wells or may contain a different number of wells. Respective wells from the various rows may be aligned along a direction perpendicular to the direction of the rows; or they may be aligned along a direction which is not perpendicular to the direction of the rows. In this case, the two or more rows can be said to be staggered or offset, as illustrated in **Fig. 2a**.

Two adjacent wells may be connected by a groove. Grooves may thus connect some of the wells together so as to form a group of well. Alternatively, all wells may be connected together by grooves.

The grooves may also contain the porous material.

As an example, when the microplate comprises wells arranged in two rows which are staggered or offset as shown in **Fig. 2a**, two neighboring wells from the two rows (one well of one row and the other well from the other row) may be connected by a groove, forming a zigzag configuration, as shown in **Fig. 2b**.

Such a configuration allows the porous material to be a continuous monobloc, resulting in a single insertion of a single piece of porous material (instead of several insertions of pieces of porous material into each well).

As another example, when the microplate comprises wells arranged in two rows which are staggered or offset as shown in **Fig. 2a**, the wells of the same row may be connected by grooves, forming two rows of connected wells.

In such a configuration, a continuous monobloc of a single piece of the porous material may be inserted for each row (two insertions of the single piece of the porous material for two rows).

The area in which the well(s) is/are arranged may be recessed, for example, 2 mm, 3 mm, 4 mm or 5 mm below the surface of the microplate, thereby limiting the risk of the user touching and contaminating the porous material in the wells while handing the microplate.

The microplate may further comprise at least one collection well, preferably a plurality of collection wells. The collection well(s) may be used for collecting and holding the recovered droplets.

The opening of the collection wells and the surface of the porous material (on which a volume of carrier fluid is to be placed) may be in the same plane.

The microplate may comprise 1 to 100 collection wells, for example, 1 to 10 collection wells, 10 to 30 collection wells, 30 to 50 collection wells, 50 to 80 collection wells, or 80 to 100 collection wells.

In some embodiments, the microplate may comprise a larger number of wells containing the porous material than the number of collection wells.

In other embodiments, the microplate may comprise a smaller number of wells containing the porous material than the number of collection wells.

Preferably, the microplate comprises the same number of collection wells as the number of wells containing the porous material.

The microplate may further comprise a protective film which covers the surface of the microplate, which is to be removed when the microplate is used.

### Minifluidic instrument for collecting at least one droplet

The invention also relates to a minifluidic instrument for collecting at least one droplet.

The minifluidic instrument comprises:
- a supplying unit comprising at least a channel and an outlet;
- a control unit for controlling the flow rate of a carrier fluid comprising at least one droplet in the channel of the supplying unit;
- the microplate as described above, and
- a manipulation unit for displacing at least one of the outlet of the supplying unit and the microplate.

Such a minifluidic instrument allows the method as described above to be performed in a continuous and seamless manner as well as to be compatible with various minifluidic protocols, involving pipetting, droplet deposition, droplet aspiration, or the like.

The first fluid and the carrier fluid may be as described above.

The supplying unit may be configured to supply at least one droplet of a first fluid within a carrier fluid through the outlet and the channel.

The supplying unit may be also configured to recover at least one droplet of the first fluid remaining on the porous material of the microplate through the outlet.

The supplying unit preferably comprises an array of channels and outlets, forming a multiplex structure of the minifluidic instrument, thereby increasing the throughput.

The channels and/or outlets of the supplying unit may be capillaries.

The channels and/or outlet(s) may be oriented vertically, with the opening of the outlets facing downwards.

Alternatively, the channels may be arranged vertically, and the outlets may be arranged horizontally.

By "*controlling the flow rate*" is meant that the control unit is configured to control the amount (per unit of time) and/or the direction (e.g., release or aspiration) of the carrier fluid that passes through the channel of the supplying unit.

The gas (e.g., air) may be introduced into the supplying unit by controlling the flow rate of the carrier fluid comprising at least one droplet in the channel of the supplying unit.

The control unit may comprise a pump such as a peristaltic pump, a pressure regulator, or a syringe.

The control unit may further comprise an optical droplet detector, which facilitates the precise control of movement of droplets flowing in the channel.

The control unit may be configured to dispense (release) a volume of carrier fluid comprising at least one droplet flowing in the channel of the supplying unit from the channel. The control unit may be also configured to aspirate at least droplet remaining on the porous material of the microplate into the outlet of the supplying unit. The volume of the carrier fluid released may be as described above in connection with the method for collecting at least one droplet.

The manipulation unit may be a robotic arm or any type of mechanical device that is designed to move and position equipment.

The manipulation unit may be configured to displace the supplying unit with respect to the microplate in three dimensions, by combining in the x, y and z directions.

For example, the manipulation unit may comprise a micro-stepper motor. Such a micro-stepper motor enables the displacement of the channels (or capillaries) in x, y and z directions, for example between a reservoir of a carrier fluid, well(s) containing the porous material, collection well(s) or vial(s), and an additional microplate (which will be explained below).

The x direction represents a horizontal movement (e.g., from left to right in the perspective of the user); the y direction represents a horizontal movement perpendicular to the x direction (e.g., closer to the user or farther away from the user); and the z direction represents a vertical movement (e.g., up and down in the perspective of the user).

For example, the outlet(s) of the supplying unit may be positioned in an orientation that allows the carrier fluid comprising a droplet to be deposited onto the porous material of the microplate (for example, above the porous material), and/or the outlet(s) of the supplying unit may be positioned into the correction well(s) of the microplate.

The channels of the supplying unit may be displaced vertically, along the z direction.

The minifluidic instrument may further comprise an aspiration unit. The aspiration unit may comprise an aspiration tip and may be configured to aspirate at least one droplet of the first fluid remaining on the porous material of the microplate through the aspiration tip.

For example, when the minifluidic instrument comprises both of the supplying unit and the aspiration unit, the supplying unit may be configured to supply a volume of carrier fluid comprising at least one droplet flowing in the channel of the supplying unit through the outlet while the aspiration unit may be configured to aspirate the droplet through the aspiration tip. However, it is also understood that the minifluidic instrument may comprise a supplying unit, which may be configured to supply a volume of carrier fluid comprising at least one droplet through the outlet and to aspirate the droplet through the same outlet, without requiring such an additional aspiration unit.

Advantageously, the channel(s) and/or the outlet(s) of the supplying unit form a part of a cartridge.

The cartridge may be removable from the minifluidic instrument, and/or may be disposable.

The microplate may be also removable from the minifluidic instrument, and/or may be disposable.

Preferably, the minifluidic instrument operates with a microplate having a plurality of wells containing the porous material, the microplate being removable from the minifluidic instrument and optionally disposable.

Preferably, the outlets, porous materials and wells are arranged spatially with each other such that parallel processing and collection of a plurality of droplets are possible.

The minifluidic instrument may comprise an additional microplate comprising at least one well configured to contain a reagent and/or at least one well configured to contain a sample. In this case, the manipulation unit may be also configured to displace the outlet(s) of the supplying unit above the additional microplate, and then to lower the outlet(s), which in turn pipet in sequentially samples and reagents.

The additional microplate preferably comprises a plurality of wells configured to contain a sample and/or a plurality of wells configured to contain a reagent.

As a non-limiting example, the microplate and the additional microplate may be arranged side by side. The opening of the wells of two microplates may be in the same plane.

The microplate and the additional microplate may be disposed onto or into a holder.

In the minifluidic instrument, the microplate and/or the additional microplate may be mobile and the cartridge (formed by the channels of the supplying unit) may be immobile. Alternatively, the microplate and/or the additional microplate may be immobile while the cartridge may be mobile.

For example, the microplate and the additional microplate may be displaced together horizontally, along x and y directions while the cartridge may be displaced along the z direction.

In some embodiments, the minifluidic instrument may further comprise a magnetic tweezer. The magnetic tweezer makes it possible to perform biology protocols using magnetic beads within the supplying units or within the droplets.

In some embodiments, the minifluidic instrument may further comprise a thermal system for controlling the temperature manipulated fluids and samples. Such a thermal system allows for a wide variety of protocols, such as thermalized incubation (from 4°C to 98°C) and/or thermal cycling.

The method of the invention, the microplate and the minifluidic instrument may be explained below by way of figures.

The method comprises providing at least one droplet **2** of a first fluid within a carrier fluid **1 (****Fig. 1a****)**; placing a volume of the carrier fluid **1** on a porous material **3**, the volume comprising a single droplet **2** of the first fluid (**Fig. 1b**); and removing the carrier fluid by sorption by the porous material **(****Fig. 1c**, illustrating the porous material **3'** that has adsorbed and/or absorbed the carrier fluid). The droplet **2** remains on the surface of the porous material **3'**.

The method may further comprise aspirating air or surrounding gas into the capillary as a spacer **4 (****Fig. 1c****)**.

In **Fig. 1**, the same capillary **5** is used for placing the volume of the carrier fluid on the porous material and for aspirating a spacer. It is understood that different capillaries may be used.

Then, the method comprises recovering the droplet **2** remaining on the porous material **3'**, for example, by lowering the capillary and sucking in the droplet through the capillary **(****Fig. 1d** and **Fig. 1e****)**.

The droplet aspirated back in the capillary is, as shown in **Fig. 1e**, surrounded by air (spacer **4)**.

The capillary may be then displaced above a collection well, and the droplet is collected in the collection well **(****Fig. 1f to Fig. 1h****).**

By making reference to **Fig. 2a**, the microplate **6** comprises eight wells **7** each containing the porous material **3**. The wells **7** are arranged in two rows, each row having four wells. It is understood that the microplate shown in **Fig. 2a** is one example, and that the number of wells on the microplate is not limited to eight and to this arrangement.

The wells of the two rows may be also connected by grooves **7' (****Fig. 2b****)**, forming, for example, a zigzag configuration as shown in **Fig. 2b**.

In this case, the porous material may be a monobloc of a single piece of the porous material, having a form corresponding to this zigzag configuration.

Alternatively, the microplate **6** may comprise one well **7**, as shown in **Fig. 2c**. In such a configuration, when the volume of the carrier fluid comprising at least one droplet of the first fluid is placed more than one time, the volume may be placed at a distance from another volume, at least 2 mm apart, for example, 2.1 mm, 2.2 mm, 2.3 mm, 2.4 mm or 2.5 mm apart (dotted cercles show the area where each volume may be placed, with a distance of 2.36 mm, for example).

### Application

The present invention may be particularly advantageous in droplet or plug microfluidics.

For example, the present invention may be particularly useful for collecting and manipulating individual droplets or plugs that have been generated using a droplet minifluidic or a plug minifluidic instrument, while removing the residual carrier fluid during the collection process.

The present invention may be used in a variety of applications, including DNA sequencing, protein analysis and cell sorting.

One example is sample preparation, particularly for next-generation sequencing, in which cells are compartmentalized in small droplets, allowing for the amplification and sequencing of each individual cell. The present invention may be applied to not only isolate droplets from the oil and optionally the surfactant which can interfere chemical reactions or downstream analyses but also to collect the droplets individually, allowing for microscale analysis at the single-cell level, for example.

### EXAMPLES

The following examples illustrate the invention without limiting it.

### Example 1: Preparation of microplate

A polypropylene microplate as shown in **Fig. 2a** was prepared by injection molding. The area containing the wells for the porous material were recessed by 3.2 mm below the surface of the microplate.

The wells for the porous material had a maximum diameter 4 mm and comprised 4 ridges equally spaced from each other and extending along the inner wall of each well.

The wells were arranged in 2 rows of 4 wells. The two rows were staggered with each other.

The distance between two neighboring wells (two closest cells) was 2.36 mm.

Pellets of sintered PTFE porous material (purchased from BOLA, reference N1617-35) was adjusted to a size of a diameter of 4 mm and a thickness of 1.5 mm (sorption capacity of 6 µL without saturation).

The pore size of the porous material was 5 µm.

The porosity of the porous material was measured to 32%.

The PTFE pellets were inserted into the wells of the microplate.

### Example 2: Installation of the minifluidic instrument

A multi-OMICS platform, Magelia^{®}, was used and customized for micropipetting droplets ranging from 0.5 µL to 12 µL in parallel within eight capillaries. This instrument was composed of X-Y-Z axes motorized with micro-stepper motors, enabling the displacement of the capillaries between an oil reservoir (continuous phase) and microwells plates where the reagents and samples were located.

The precise movements of droplets within the capillaries were provided by syringe pumps associated with optical droplet detectors.

In addition, the platform was also equipped with a magnetic tweezer and thermal modules.

The microplate prepared in Example 1 was installed in the multi-OMICs platform, Magelia^{®}.

### Example 3: DNA sequencing sample preparation

RNA sample and SPRI (solid-phase reversible immobilization) beads were mixed thoroughly in a tube using a pipette, allowing the SPRI beads to bind with RNA fragments of a specific size range.

The mixture was incubated with reverse transcriptase (RT) enzymes and other reagents necessary for RT at room temperature for 5 minutes.

The SPRI beads, along with the bound DNA (cDNA) fragments of desired sizes were captured using a magnet, and the supernatant containing unbound fragments is discarded.

The cluster of captured beads was washed with 80% ethanol by pipetting to remove any residual impurities, and then incubated with 80% ethanol for 30 seconds. This was repeated.

Elution buffer was added, and the resulting mixture was incubated for 2 minutes to release the bound DNA fragments from the beads.

The SPRI beads were captured using a magnet, and the eluate containing the size-selected DNA fragments was collected.

The sample was pipetted onto sintered material and incubated for 30 seconds to remove any remaining oil, and the sample was recovered for downstream applications such as next-generation sequencing.

After end-repair, adapter ligation, and amplification, the sample was compartmentalized into droplets along with sequencing reagents, such as primers and enzymes, to generate individual microreactors (droplet emulsion).

### Example 4: Droplet collection

The minifluidic instrument of Example 2 comprising the microplate of Example 1 was used to collect droplets from the sample (droplet emulsion) prepared in Example 3.

On the sintered PTFE pellets of the microplate, 20 µL of the emulsion was placed from the outlet (capillary) of the supplying unit of the minifluidic instrument. Then, air was aspirated into the capillary as a spacer.

The droplet remaining on the porous material was aspirated into the capillary, and then collected in the collection well.

No oil residue was visually distinguished.

The recovered droplets were transferred to another vial, for example, a tube strip. The microplate including the oil-soaked porous material and the cartridge were discarded.

### Example 5: Tests of biocompatibility

### Release/inhibition assay

PCR grade water was deposited for 20 seconds on the porous material of the invention. The water was then mixed with a qPCR mix and human DNA (hDNA), and subjected to qPCR.

The qPCR efficiency and the Ct values of the samples mixed with the water deposited on the porous material were comparable to the control samples without water deposited on the porous material, indicating that the porous material does not release inhibitory compounds for conventional qPCR.

### DNA adsorption assay

A mixture of hDNA samples (200 ng and 20 ng) in PCR grade water were deposited for 20 seconds on the porous material of the invention. The mixture was then mixed with a qPCR mix and subjected to qPCR.

The qPCR efficiency and the Ct values of the samples deposited on the porous material were comparable to the control samples that were not deposited on the porous material.

This shows that the porous material does not adsorb a significant amount of DNA in an aqueous solution during the duration of 20 seconds.

## Claims

1. A method of collecting at least one droplet, comprising steps of:
a) providing one or more droplets of a first fluid within a carrier fluid, the first fluid being immiscible with the carrier fluid,
b) placing a volume of the carrier fluid on a porous material, the volume comprising at least one droplet of the first fluid,
c) removing the carrier fluid by sorption by the porous material, and
d) recovering the droplet remaining on the porous material.

2. The method of claim 1, wherein the volume of the carrier fluid comprises a single droplet of the first fluid.

3. The method of claim 1, wherein the volume of the carrier fluid comprises two or more droplets of the first fluid, and the method further comprises a step of mixing the droplets before step d).

4. The method of any one of claims 1 to 3, wherein the carrier fluid and the porous material are hydrophobic, and the first fluid is hydrophilic.

5. The method of any one of claims 1 to 4, wherein step b) and step d) are performed via the same capillary, and the method further comprises, between step b) and c), an intermediate step of aspirating air or a surrounding gas into the capillary as a spacer.

6. The method of any one of claims 1 to 5, wherein the contact angle of the carrier fluid on the porous material is lower than the contact angle of the first fluid on the porous material; and/or wherein the contact angle of the carrier fluid on the porous material is greater than or equal to 0° and less than 90°, preferably from 0° to 45°, more preferably from 0° to 30°, still more preferably from 0° to 20°, and even more preferably from 0° to 5°; and/or wherein the contact angle of the first fluid on the porous material is from more than 90° to less than or equal to 180°, preferably from 110° to 180°, and more preferably from 130° to 180°.

7. The method of any one of claims 1 to 6, wherein the porous material comprises a treated cotton, treated cellulose, parafilm, a fluorinated material, or a perfluorinated material.

8. The method of any one of claims 1 to 7, wherein the porous material is selected from PTFE (polytetrafluoroethylene), ETFE ethylene-tetrafluoroethylene), FEP (fluorinated ethylene-propylene), PFPE (perfluoropolyether), FKM (fluoroelastomer), and FFKM (perfluoroelastomer).

9. The method of any one of claims 1 to 8, wherein the porous material is in the form of a membrane, pellet or film, and/or wherein the porous material has a structure which is fibrous, in particular woven or non-woven, sintered or which is a foam.

10. A microplate for performing the method of any one of claims 1 to 9, comprising at least one well containing the porous material, preferably a plurality of wells containing the porous material.

11. The microplate of claim 10, further comprising at least one collection well, preferably a plurality of collection wells, and more preferably the same number of collection wells as the number of wells containing the porous material.

12. A minifluidic instrument, comprising:
- a supplying unit comprising at least a channel and an outlet;
- a control unit for controlling the flow rate of a carrier fluid comprising at least one droplet in the channel of the supplying unit;
- the microplate of any one of claim 10 or 11, and
- a manipulation unit for displacing at least one of the supplying unit and the microplate.

13. The minifluidic instrument of claim 12, further comprising an aspiration unit.

14. The minifluidic instrument of claim 12 or 13, further comprising an additional microplate comprising a well for a reagent and/or a sample, wherein the outlet can pipet in sequentially the sample and/or reagent.

15. The minifluidic instrument of any one of claims 12 to 14, wherein the supplying unit comprises multiple channels having a respective outlet, the microplate comprises a plurality of wells containing the porous material, and optionally the additional microplate comprises multiple wells.
